# EUROPEAN PATENT APPLICATION

(11) **EP 4 796 495 A1**
(43) Date of publication of application: **26.08.2026**
(21) Application number: 26157746.4
(22) Date of filing: 11.02.2026
(51) Int. Cl.: C01B 25/10, H01M 10/0562

(54) **SULFIDE SOLID ELECTROLYTE AND PREPARATION METHOD AND APPLICATION THEREOF**

(30) Priority: 24.02.2025 CN 202510205655
(71) Applicant: AESC Japan Ltd., Yokohama-shi, Kanagawa 220-0012 (JP)
(72) Inventor: YU, Le, Pudong, New Area Shanghai 201315 (CN); WU, Ming, Pudong, New Area Shanghai 201315 (CN)
(74) Representative: Becker, Eberhard

(57) **Abstract**

The invention provides a sulfide solid electrolyte and a preparation method and an application thereof. A molecular formula of the sulfide solid electrolyte is LiₐP_{1-b}M_{b}S_{c}O_{d}Xₑ; wherein: 5<a<10; 0<b<1, 3<c<6, 0<d<2.5, 4<c+d<6, 0<e<2; M is selected from one or a plurality of Al, Ga, In, Ti, Sc, As, Sb, Bi, V, Nb, Ca, Mg, Sr, Ba, Zn, Cr, Sn, or Pb, and X is selected from one or a plurality of Cl, Br, or I. In an X-ray diffraction pattern obtained by CuKα radiation of a sulfide solid electrolyte powder, no diffraction peaks appear in ranges of 27° to 27.3°, 29° to 29.5°, and 35° to 35.2°. The invention provides a sulfide solid electrolyte and a preparation method and an application thereof that may obtain a high-purity doped sulfide solid electrolyte, suppress the formation of impurity phases, and improve the energy efficiency and cycle performance of the lithium-ion battery.

## Description

### BACKGROUND OF THE INVENTION

### Field of the Invention

The invention relates to the field of lithium-ion battery techniques, specifically to a sulfide solid electrolyte and a preparation method and an application thereof.

### Description of Related Art

**In** recent years, with the rapid development of electric vehicles and large-scale energy storage systems, the demand for high-energy-density and high-safety all-solid-state lithium batteries has become increasingly urgent. Sulfide solid electrolytes are considered one of the most promising candidate materials for constructing all-solid-state lithium batteries due to advantages thereof such as high ionic conductivity, wide electrochemical window, and good machinability. The synthesis method of sulfide solid electrolytes mainly includes, for example, solid-phase sintering, mechanical ball milling, or liquid-phase method, wherein solid-phase sintering and mechanical ball milling are more widely used preparation methods due to relatively simple processes.

However, in the actual preparation process, the reaction is incomplete due to the easy volatilization of the sulfur element at high temperatures and the larger reaction barrier of solid-phase reaction. It is difficult to completely avoid the formation of impurity phases such as Li₂S, LiCl, and P, thus significantly reducing the ionic conductivity of sulfide solid electrolyte and affects the electrochemical stability thereof. While using excessive sulfur treatment may reduce sulfur loss, it may lead to the formation of new impurities and increase safety hazards, making it difficult to balance performance and cost. Doping may improve the ionic conductivity of sulfide solid electrolytes, but the selection of doping elements and the optimization of doping amount lack systematic theoretical guidance, and the mechanism of doping effect on phase purity and electrochemical performance is not yet fully understood.

### SUMMARY OF THE INVENTION

The invention provides a sulfide solid electrolyte and a preparation method and an application thereof. Via the sulfide solid electrolyte and the preparation method and the application thereof provided by the invention, a high-purity doped sulfide solid electrolyte may be obtained, thus reducing irreversible lithium-ion consumption and coulombic efficiency reduction caused by impurities, reducing these side reactions, improving coulombic efficiency, and thus improving the energy efficiency and cycle performance and the like of the lithium-ion battery.

To solve the above technical issues, the invention provides a sulfide solid electrolyte, wherein a molecular formula of the sulfide solid electrolyte is LiₐP_{1-b}M_{b}S_{c}O_{d}Xₑ, wherein: 5<a<10; 0<b<1, 3<c<6, 0<d<2.5, 4<c+d<6, 0<e<2; M is selected from one or a plurality of Al, Ga, In, Ti, Sc, As, Sb, Bi, V, Nb, Ca, Mg, Sr, Ba, Zn, Cr, Sn, or Pb, and X is selected from one or a plurality of Cl, Br, or I. In an X-ray diffraction pattern obtained by CuKα radiation of a sulfide solid electrolyte powder, no diffraction peaks appear in ranges of 27° to 27.3°, 29° to 29.5°, and 35° to 35.2°.

In one embodiment of the invention, M is selected from one or a plurality of Sb, In, Bi, or Mg, and X is selected from Cl.

**In** one embodiment of the invention, a value of b is in a range of 0 < b ≤ 0.1.

In one embodiment of the invention, a purity of the sulfide solid electrolyte is greater than 99%.

The invention also provides a preparation method of the sulfide solid electrolyte, including steps of:
mixing a Li source, a P source, a M source, a S source, and a X source stoichiometrically according to a chemical formula of the sulfide solid electrolyte and then performing a grinding treatment to obtain a sulfide solid electrolyte precursor powder; and
performing a calcination treatment on the sulfide solid electrolyte precursor powder to obtain the sulfide solid electrolyte.

In one embodiment of the invention, the Li source is selected from one or a plurality of LiCl, LiBr, LiI, or Li₂S; the P source is selected from one or a plurality of elemental P, P₂S₅, P₄S₆, PCl₅, or PBr₅; the M source is selected from one or a plurality of oxides of M or sulfides of M; the S source is selected from one or a plurality of elemental S, Li₂S, P₂S₅, P₄S₆ or the sulfides of M, and the sulfides of M include one or a plurality of As₂S₅, As₂S₃, Sb₂S₅, Sb₂S₃, Bi₂S₅, Bi₂S₃, Al₂S₃, Ga₂S₃, In₂S₃, Sc₂S₃, MgS, CaS, SrS, BaS, ZnS, CrS, SnS, or PbS; the X source is selected from one or a plurality of LiCl, PCl₅, LiBr, PBr₅, LiI, or I₂; the O element in the chemical formula comes from the oxide of M.

In one embodiment of the invention, a grinding time is 1h to 48h, a grinding speed is 50 rpm to 1500 rpm, and a ball-to-material ratio is 1:1 to 100:1.

In one embodiment of the invention, a temperature of the calcination treatment is 400 °C to 600 °C, and a time of the calcination treatment is 1h to 24h.

The invention also provides an all-solid-state lithium-ion battery, including at least:
a positive electrode sheet;
a negative electrode sheet; and
a solid electrolyte membrane, wherein the solid electrolyte membrane is disposed between the positive electrode sheet and the negative electrode sheet adjacent to each other, and the solid electrolyte membrane includes the sulfide solid electrolyte.

The invention also provides an electronic equipment including the all-solid-state lithium-ion battery.

Based on the above, the invention provides a sulfide solid electrolyte and a preparation method and an application thereof. By controlling the types of raw materials used in the synthesis of the sulfide solid electrolyte, the nucleation of the sulfide solid electrolyte may be promoted, and the grain growth direction and rate may be controlled, resulting in more uniform grain size, higher crystallinity, reduced impurity phases at grain boundaries, and improved phase purity. At the same time, the selection of synthetic raw materials may change the thermodynamic and kinetic conditions of the reaction, enabling thermodynamic and kinetic regulation, reducing the Gibbs free energy of impurity phase formation, making the reaction more inclined to generate the crystalline phase of the sulfide solid electrolyte, increasing the formation rate of the target product, and inhibiting the formation of impurity phase. By introducing specific doping elements and optimizing the doping amount, the formation of impurity phases such as Li₂S, LiCl, and P is effectively suppressed, resulting in high-purity sulfide solid electrolyte and enhancing the air stability and chemical stability of the sulfide solid electrolyte. A high-purity doped sulfide solid electrolyte may be obtained, thus reducing irreversible lithium-ion consumption and coulombic efficiency reduction caused by impurities, reducing these side reactions, improving coulombic efficiency, and thus improving the energy efficiency and cycle performance, etc., of the lithium-ion battery.

### BRIEF DESCRIPTION OF THE DRAWINGS

To more clearly illustrate the technical solutions of the embodiments of the invention, the accompanying drawings used in the description of the embodiments will be briefly introduced below. Obviously, the drawings described below are only some embodiments of the invention. For those skilled in the art, other drawings may be obtained based on these drawings without inventive step effort.
FIG. 1 shows the X-ray diffraction pattern of the sulfide solid electrolyte in Example 3.
FIG. 2 shows the X-ray diffraction pattern of the sulfide solid electrolyte in Example 11.
FIG. 3 shows the X-ray diffraction pattern of the sulfide solid electrolyte in Example 12.
FIG. 4 shows the X-ray diffraction pattern of the sulfide solid electrolyte in Example 13.
FIG. 5 shows the X-ray diffraction pattern of the sulfide solid electrolyte in Comparative Example 1.
FIG. 6 shows the X-ray diffraction pattern of the sulfide solid electrolyte in Comparative Example 4.

### DESCRIPTION OF THE EMBODIMENTS

The following specific examples illustrate the implementation of the invention. Those skilled in the art may easily understand other advantages and effects of the invention from the content disclosed in this specification. The invention may also be implemented or applied through other different specific embodiments, and various details in this specification may also be modified or changed based on different viewpoints and applications without departing from the spirit of the invention.

It should be understood that the invention may be implemented in different forms and should not be construed as being limited to the embodiments set forth herein. Instead, providing these embodiments will make the disclosure thorough and complete, and will fully convey the scope of the invention to those skilled in the art.

The technical solution of the invention will be further described in detail below with reference to several embodiments. Obviously, the described embodiments are only some embodiments of the invention, and not all embodiments. Based on the embodiments of the invention, all other embodiments obtained by those skilled in the art without inventive step effort are within the scope of protection of the invention.

The invention provides a sulfide solid electrolyte. The molecular formula of the sulfide solid electrolyte is LiₐP_{1-b}M_{b}S_{c}O_{d}Xₑ, wherein: 5<a<10; 0<b<1, 3<c<6, 0<d<2.5, 4<c+d<6, 0<e<2; M is selected from one or a plurality of Al, Ga, In, Ti, Sc, As, Sb, Bi, V, Nb, Ca, Mg, Sr, Ba, Zn, Cr, Sn, or Pb, etc., and X is selected from one or a plurality of Cl, Br or I, etc. In particular, the purity of the sulfide solid electrolyte is, for example, greater than 99%. In the X-ray diffraction (XRD) pattern obtained by CuKα rays for the sulfide solid electrolyte powder, no diffraction peaks appear in the ranges of 27° to 27.3°, 29° to 29.5°, and 35° to 35.2°. That is, no diffraction peaks of Li₂S appear in the range of 27° to 27.3°, no diffraction peaks of P appear in the range of 29° to 29.5°, and no diffraction peaks of LiCl appear in the range of 35° to 35.2°. The present application enables the production of high-purity doped sulfide solid electrolyte, thus reducing irreversible lithium-ion consumption and coulombic efficiency reduction caused by impurities, reducing these side reactions, improving coulombic efficiency, and thus improving the energy efficiency and cycle performance and the like of the lithium-ion battery.

In one embodiment of the invention, M is selected from one or a plurality of Sb, In, Bi, or Mg, etc. The ionic radii of these elements are close to those of the host elements in the sulfide solid electrolyte, such as sulfur and phosphorus, etc. Therefore, when doped, they may more readily replace the positions of the host elements without causing excessive lattice distortion. Furthermore, elements such as Sb, In, Bi, or Mg may form stable chemical bonds with sulfur element in sulfides, which are difficult to be destroyed by external influences. This effectively improves the air stability of the sulfide solid electrolyte, enhances the air stability and chemical stability of the sulfide solid electrolyte, improves the cycle stability and performance of batteries, and increases the practicality and reliability of the sulfide solid electrolyte.

In one embodiment of the invention, X is selected as a halogen element, and depending on the halogen, the degree of anion disorder between the 4a and 4c sites in the crystal structure of the sulfide solid electrolyte varies, ranging from a small number of antisite defects when X is I to 60% site disorder when X is Cl. The lithium conductivity of these compounds mainly depends on the degree of disorder occupied by the anion and cation sites. Therefore, X may be selected, for example, by choosing Cl, to improve the ionic conductivity and electrochemical stability of the sulfide solid electrolyte, and improve voltage stability. The range of values of b is 0<b≤0.1. When the doping level is too low, an effective dielectric layer may not be formed between the electrolyte and the lithium metal anode. Excessive doping may lead to excessive lattice distortion, destroying the original crystal structure. This may result in decreased structural stability of the material, or even phase separation or amorphization, thereby reducing the ionic conductivity of the material. In a specific embodiment of the invention, when M is a +5 valence element, b is optimally 0.04; when M is a +3 valence element, b is optimally 0.02; and when M is a +2 valence element, b is optimally 0.02, in order to improve the cycle performance of the lithium-ion battery.

The invention also provides a preparation method of the sulfide solid electrolyte, including at least: mixing Li source, P source, M source, S source and X source stoichiometrically according to the chemical formula of the sulfide solid electrolyte, and then performing a grinding treatment to obtain a sulfide solid electrolyte precursor powder; performing a calcination treatment on the sulfide solid electrolyte precursor powder to obtain the sulfide solid electrolyte.

In one embodiment of the invention, according to the chemical formula LiₐP_{1-b}M_{b}S_{c}O_{d}Xₑ of the sulfide solid electrolyte, the Li source, P source, M source, S source, and X source are mixed evenly stoichiometrically, wherein the Li source is selected from one or a plurality of LiCl, LiBr, LiI, or Li₂S, etc. The P source is selected from one or a plurality of elemental P, P₂S₅, P₄S₆, PCl₅, or PBr₅, etc. The M source is selected from one or a plurality of oxides of M or sulfides of M. The S source is selected from one or a plurality of elemental S, Li₂S, P₂S₅, P₄S₆, or sulfides of M. The sulfides of M include one or a plurality of As₂S₃, As₂S₃, Sb₂S₃, Sb₂S₃, Bi₂S₅, Bi₂S₃, Al₂S₃, Ga₂S₃, In₂S₃, Sc₂S₃, MgS, CaS, SrS, BaS, ZnS, CrS, SnS, or PbS, etc. The X source is selected from one or a plurality of LiCl, PCl₅, LiBr, PBr₅, LiI, or I₂, etc. The O element in the chemical formula comes from oxides of M. After the raw materials are mixed evenly, for example, they are ground by ball milling. The raw materials are placed in a ball mill jar and ball milled under an inert gas atmosphere, wherein the ball-to-material ratio is, for example, 1:1 to 100:1, the grinding speed is, for example, 50 rpm to 1500 rpm, and the grinding time is, for example, 1 h to 48 h, to obtain a sulfide solid electrolyte precursor powder. Since the doped material is an oxide of M or sulfide of M, the surface energy thereof is higher, thus attracting surrounding ions such as Li⁺, Ps⁺, and S₂⁻, thus promoting the nucleation of sulfide solid electrolyte and controlling the grain growth direction and rate, making the grain size more uniform, the crystallinity higher, reducing impurity phases at grain boundaries, and improving phase purity.

In one embodiment of the invention, a calcination treatment is performed on the sulfide solid electrolyte precursor powder, wherein the temperature of the calcination treatment is, for example, 400 °C to 600 °C, and the time of the calcination treatment is, for example, 1h to 24h, to obtain the sulfide solid electrolyte. The doping of the oxides of M or sulfides of M alters the thermodynamic and kinetic conditions of the reaction, thereby enabling thermodynamic and kinetic regulation. From a thermodynamic perspective, the Gibbs free energy for the formation of impurity phases is reduced, making the reaction more inclined to form the crystalline phase of the sulfide solid electrolyte; from a kinetic perspective, the formation rate of the target product is increased and the formation of impurity phases is suppressed, thereby improving the purity of the resulting sulfide solid phase.

The invention also provides an all-solid-state lithium-ion battery, including a positive electrode sheet, a negative electrode sheet, and a solid electrolyte membrane. The solid electrolyte membrane is disposed between the positive electrode sheet and the negative electrode sheet adjacent to each other. In particular, the solid electrolyte membrane includes the sulfide solid electrolyte to improve the cycle performance of the all-solid-state lithium-ion battery. In one embodiment of the invention, the solid electrolyte membrane is obtained by cold pressing the sulfide solid electrolyte under a pressure of 300 MPa to 400 MPa, and the thickness of the solid electrolyte membrane is, for example, 100 µm to 500 µm. In the invention, the all-solid-state lithium-ion battery is, for example, a primary battery or a secondary battery. The secondary battery is, for example, a pouch battery, a hard-shell battery, or a cylindrical battery, etc. The invention does not impose specific limitations on the types and categories of all-solid-state lithium-ion battery.

**In** one embodiment of the invention, the positive electrode sheet includes, for example, a positive current collector and a positive active layer disposed at at least one side of the positive current collector. In particular, the positive electrode current collector is a foil formed by surface treatment of, for example, nickel, titanium, aluminum, silver, stainless steel, or carbon, etc. In addition to foil, the positive electrode current collector may also be used in any one or a plurality of combinations of various forms such as film, mesh, porous, foam, or non-woven fabric, and the thickness of the positive electrode current collector is, for example, 8 µm to 15 µm.

**In** one embodiment of the invention, the positive electrode active layer includes, for example, a positive electrode active material, a positive electrode electrolyte, a positive electrode conductive agent, and a positive electrode binder, etc., wherein the positive electrode active material is selected from at least one of lithium nickel cobalt manganese oxide (NCM), lithium nickel oxide (LNO), lithium manganese oxide (LMO), lithium nickel manganese oxide (LNMO), lithium cobalt oxide (LCO), or lithium nickel cobalt aluminum oxide (NCA), etc. The positive electrode electrolyte is, for example, a halide solid electrolyte. The positive electrode conductive agent is, for example, selected from at least one of graphite, graphene, conductive carbon black (Super P), vapor-grown carbon fiber (VGCF), or carbon nanotubes, etc. The positive electrode binder is selected from at least one of polyvinylidene fluoride (PVDF), carboxymethyl cellulose (CMC), polymerized styrene-butadiene rubber (SBR), polyvinyl pyrrolidone (PVP), polymethyl methacrylate (PMMA), polyacrylonitrile (PAN), polyacrylic acid (PAA), polyurethane (PU), polyvinyl alcohol (PVA), sodium alginate (Alg), ethylene-propylene-diene monomer (EPDM), styrene-butadiene rubber, fluororubber, β-cyclodextrin polymer (β-CDp), polypropylene emulsion (LA132), polytetrafluoroethylene (PTFE), ethylene-tetrafluoroethylene copolymer (ETFE), fluorinated ethylene-propylene copolymer (FEP), perfluoroalkoxy resin (PFA), polychlorotrifluoroethylene (PCTFE), ethylene-chlorotrifluoroethylene copolymer (ECTFE), polyvinylidene fluoride-hexafluoropropylene copolymer (PVDF-HFP), or polyvinylidene fluoride-trifluorochloroethylene copolymer (PVDF-CTFE), etc.

In one embodiment of the invention, the positive electrode current collector is, for example, aluminum foil. The positive electrode active material is, for example, LiNi_{0.8}Co_{0.1}Mn_{0.1}O₂. The positive electrode electrolyte is, for example, Li_{2.35}Zr_{0.65}Fe_{0.35}Cl₅Br_{0.5}I_{0.5}. The positive electrode conductive agent includes, for example, Super P and VGCF, and the mass ratio of Super P to VGCF is, for example, 1:1. The positive electrode binder is, for example, PTFE. The positive electrode sheet is obtained by evenly mixing the positive electrode active material, positive electrode electrolyte, positive electrode conductive agent, and positive electrode binder in a mass ratio of 69:29:1:1, and then laminating with aluminum foil by dry pressing. The invention does not limit the mass ratio of positive electrode active material, positive electrode electrolyte, positive electrode conductive agent, and positive electrode binder, which may be selected according to actual needs, and the positive electrode current collector may be omitted as needed.

In one embodiment of the invention, the negative electrode sheet is selected from at least one of lithium metal sheet, indium metal sheet, or lithium-indium alloy sheet, etc. In another embodiment of the invention, the negative electrode sheet includes, for example, a negative current collector and a negative active layer coated on the surface of at least one side of the negative current collector. In particular, the negative electrode current collector is, for example, a copper foil current collector, a composite copper foil current collector, a carbon current collector, a foamed copper current collector, or a stainless-steel current collector, etc., and the thickness of the negative electrode current collector is, for example, 8 µm to 15 µm.

**In** one embodiment of the invention, the negative electrode active layer includes, for example, a negative electrode active material, a negative electrode electrolyte, a negative electrode conductive agent, and a negative electrode binder, etc. The negative electrode active material is selected from at least one of graphite materials, silicon materials, or composite materials of graphite materials and silicon materials, etc. The silicon material is, for example, at least one of silicon-oxygen materials or silicon-carbon materials, etc. The negative electrode electrolyte is, for example, the sulfide solid electrolyte. The negative electrode conductive agent is selected from at least one of graphite, graphene, Super P, VGCF, or carbon nanotubes, etc. The negative electrode binder is selected from at least one of PVDF, CMC, SBR, PVP, PMMA, PAN, PAA, PU, PVA, Alg, EPDM, styrene-butadiene rubber, fluororubber, β-CDp, LA132, PTFE, ETFE, FEP, PFA, PCTFE, ECTFE, PVDF-HFP, or PVDF-CTFE, etc.

**In** one embodiment of the invention, the negative electrode current collector is, for example, copper foil. The negative electrode active material is, for example, a mixture of silicon oxide material and graphite, and the ratio of silicon oxide material to graphite is, for example, 5:95. The negative electrode electrolyte is, for example, the sulfide solid electrolyte. The negative electrode conductive agent includes, for example, Super P and VGCF, and the mass ratio of Super P and VGCF is, for example, 1:1. The negative electrode binder is, for example, SBR. The negative electrode active material, negative electrode electrolyte, negative electrode conductive agent, and negative electrode binder are mixed evenly in a mass ratio of 72:22:3:3, and then laminated with copper foil by dry pressing to obtain the negative electrode sheet. The invention does not limit the mass ratio of negative electrode active material, negative electrode electrolyte, negative electrode conductive agent, and negative electrode binder, which may be selected according to actual needs, and the negative electrode current collector may be omitted as needed.

**In** one embodiment of the invention, the positive electrode sheet, solid electrolyte membrane, and negative electrode sheet are placed in sequence and pressed and sealed to obtain an all-solid-state lithium-ion battery. In particular, the assembly process of the all-solid-state battery is completed in a glove box with an inert atmosphere.

The invention will be explained in more detail below by way of examples, and these examples should not be construed as limiting. Within the scope of the invention, appropriate modifications may be made, all of which fall within the technical scope of the invention.

### Example 1

Preparation of sulfide solid electrolyte: Under an argon atmosphere, 2.015 mol of Li₂S, 1.5 mol of LiCl, 0.495 mol of P₂S₅, and 0.01 mol of MgO were placed in a tungsten carbide ball mill jar. Tungsten carbide balls were added at a ball-to-material ratio of 40:1. The ball mill was run at 100 rpm for 10 minutes, and then at 800 rpm for 16 hours to obtain an evenly mixed sulfide solid electrolyte precursor powder. The sulfide solid electrolyte precursor powder was placed in a crucible and sintered at 500 °C for 10 h. After cooling, Li_{5.53}P_{0.99}Mg_{0.01}S_{4.49}O_{0.01}Cl_{1.5} was obtained.

Preparation of solid electrolyte membrane: 50 mg of Li_{5.5}P_{0.99}Sb_{0.01}S_{4.475}O_{0.025}Cl_{1.5} was cold-pressed at 360 MPa to prepare a solid electrolyte membrane. The solid electrolyte membrane had a thickness of 400 µm and a diameter of 10 mm.

Preparation of positive electrode sheet: LiNi_{0.8}Co_{0.1}Mn_{0.1}O₂, conductive agent, Li_{2.35}Zr_{0.65}Fe_{0.35}Cl₅Br_{0.5}I_{0.5}, and PTFE were mixed in a mass ratio of 69:1:29:1. After being homogenized, the mixture was dry-pressed and laminated with aluminum foil, and then cut into circular sheets with a diameter of 10 mm to obtain a positive electrode sheet. In particular, the positive electrode conductive agent includes Super P and VGCF, and the mass ratio of Super P to VGCF is, for example, 1:1.

Negative electrode sheet: Elemental lithium sheet was selected and cut into a circular sheet with a diameter of 10 mm to obtain a negative electrode sheet.

Assembly of all-solid-state battery: The positive electrode sheet, solid electrolyte membrane, and negative electrode sheet prepared above were stacked in sequence, pressed and sealed to assemble an all-solid-state lithium-ion battery.

### Example 2

The chemical formula of the sulfide solid electrolyte prepared by using 2.0225 mol Li₂S, 1.5 mol LiCl, 0.4925 mol P₂S₅, and 0.015 mol MgO is Li_{5.545}P_{0.985}Mg_{0.015}S_{4.485}O_{0.015}Cl_{1.5}, and other operations were consistent with those in Example 1.

### Example 3

The chemical formula of the sulfide solid electrolyte prepared by using 2.03 mol of Li₂S, 1.5 mol of LiCl, 0.49 mol of P₂S₅, and 0.02 mol of MgO is Li_{5.56}P_{0.98}Mg_{0.02}S_{4.48}O_{0.02}Cl_{1.5}, and other operations were consistent with those in Example 1.

### Example 4

The chemical formula of the sulfide solid electrolyte prepared by using 2.09 mol Li₂S, 1.5 mol LiCl, 0.47 mol P₂S₅, and 0.06 mol MgO is L_{15.68}P_{0.94}Mg_{0.06}S_{4.44}O_{0.06}Cl_{1.5}, and other operations were consistent with those in Example 1.

### Example 5

The chemical formula of the sulfide solid electrolyte prepared by using 2.15 mol of Li₂S, 1.5 mol of LiCl, 0.45 mol of P₂S₅, and 0.1 mol of MgO is Li_{5.8}P_{0.9}Mg_{0.1}S_{4.4}O_{0.1}Cl_{1.5}, and other operations were consistent with those in Example 1.

### Example 6

The chemical formula of the sulfide solid electrolyte prepared by using 1.83 mol of Li₂S, 1.9 mol of LiCl, 0.49 mol of P₂S₅, and 0.02 mol of MgO is Li_{5.16}P_{0.98}Mg_{0.02}S_{4.08}O_{0.02}Cl_{1.9}, and other operations were consistent with those in Example 1.

### Example 7

The chemical formula of the sulfide solid electrolyte prepared by using 2.53 mol Li₂S, 1 mol LiCl, 0.49 mol P₂S₅, and 0.02 mol MgO is Li_{6.06}P_{0.98}Mg_{0.02}S_{4.98}O_{0.02}Cl, and other operations were consistent with those in Example 1.

### Example 8

The chemical formula of the sulfide solid electrolyte prepared by using 3.43 mol of Li₂S, 0.1 mol of LiCl, 0.49 mol of P₂S₅, and 0.02 mol of MgO is Li_{6.96}P_{0.98}Mg_{0.02}S_{5.88}O_{0.02}Cl_{0.1}, and other operations were consistent with those in Example 1.

### Example 9

The chemical formula of the sulfide solid electrolyte prepared by using 2.03 mol Li₂S, 1.4 mol LiCl, 0.1 mol LiBr, 0.49 mol P₂S₅, and 0.02 mol MgO is Li_{5.56}P_{0.98}Mg_{0.02}S_{4.48}O_{0.02}Cl_{1.4}Br_{0.1}, and other operations were consistent with those in Example 1.

### Example 10

The chemical formula of the sulfide solid electrolyte prepared by using 2.03 mol Li₂S, 1.3 mol LiCl, 0.1 mol LiBr, 0.1 mol LiI, 0.49 mol P₂S₅, and 0.02 mol MgO is Li_{5.56}P_{0.98}Mg_{0.02}S_{4.48}O_{0.02}Cl_{1.3}Br_{0.1}I_{0.1}, and other operations were consistent with those in Example 1.

### Example 11

The chemical formula of the sulfide solid electrolyte core prepared by using 2.02 mol of Li₂S, 1.5 mol of LiCl, 0.49 mol of P₂S₅, and 0.01 mol of In₂O₃ is Li_{5.54}P_{0.98}In_{0.02}S_{4.47}O_{0.03}Cl_{1.5}, and other operations were consistent with those in Example 1.

### Example 12

The chemical formula of the sulfide solid electrolyte core prepared by using 2.02 mol of Li₂S, 1.5 mol of LiCl, 0.49 mol of P₂S₅, and 0.01 mol of Bi₂O₃ is Li_{5.54}P_{0.98}Bi_{0.02}S_{4.47}O_{0.03}Cl_{1.5}, and other operations were consistent with those in Example 1.

### Example 13

The chemical formula of the sulfide solid electrolyte core prepared by using 2 mol of Li₂S, 1.5 mol of LiCl, 0.48 mol of P₂S₅, and 0.02 mol of Sb₂O₅ is Li_{5.5}P_{0.96}Sb_{0.04}S_{4.40}O_{0.10}Cl_{1.5}, and other operations were consistent with those in Example 1.

### Example 14

The chemical formula of the sulfide solid electrolyte core prepared by using 2.03 mol of Li₂S, 1.5 mol of LiCl, 0.49 mol of P₂S₅, and 0.02 mol of CaO is Li_{5.56}P_{0.98}Ca_{0.02}S_{4.48}O_{0.02}Cl_{1.5}, and other operations were consistent with those in Example 1.

### Example 15

The chemical formula of the sulfide solid electrolyte core prepared by using 2.03 mol of Li₂S, 1.5 mol of LiCl, 0.49 mol of P₂S₅, and 0.02 mol of ZnO is Li_{5.56}P_{0.98}Zn_{0.02}S_{4.48}O_{0.02}Cl_{1.5}, and other operations were consistent with those in Example 1.

### Comparative Example 1

The chemical formula of the sulfide solid electrolyte prepared by using 2 mol of Li₂S, 1.5 mol of LiCl and 0.5 mol of P₂S₅ is Li_{5.5}PS_{4.5}Cl_{1.5}, and other operations were consistent with those in Example 1.

### Comparative Example 2

The chemical formula of the sulfide solid electrolyte prepared by using 2 mol Li₂S, 1.4 mol LiCl, 0.1 mol LiBr, and 0.5 mol P₂S₅ is Li_{5.5}PS_{4.5}Cl_{1.4}Br_{0.1}, and other operations were consistent with those in Example 1.

### Comparative Example 3

The chemical formula of the electrolyte prepared by using 2 mol of Li₂S, 1.3 mol of LiCl, 0.1 mol of LiBr, 0.1 mol of LiI, and 0.5 mol of P₂S₅ is Li_{5.5}PS_{4.5}Cl_{1.3}Br_{0.1}I_{0.1}, and other operations were consistent with those in Example 1.

### Comparative Example 4

The chemical formula of the sulfide solid electrolyte prepared by using 2.21 mol Li₂S, 1.5 mol LiCl, 0.43 mol P₂S₅, and 0.14 mol MgO is Li_{5.92}P_{0.86}Mg_{0.14}S_{4.36}O_{0.14}Cl_{1.5}, and other operations were consistent with those in Example 1.

**In** one embodiment of the invention, the XRD test involves grinding and sieving the sulfide solid electrolyte powder material to prepare a powder material suitable for XRD testing, for example, passing through a 60 to 200 mesh sieve. The sieved powder was then placed on a standard sample stage to fill and flatten. The XRD detection angle range was set to 10° to 80°. The corresponding X-ray scanning speed may be set according to different models of X-ray diffractometers, generally less than 15°/min, to obtain the XRD pattern.

**In** one embodiment of the invention, the purity test involves adding the sulfide solid electrolyte to a closed high-pressure acid digester, such as nitric acid (HNO₃) and hydrochloric acid (HCl), with a volume ratio of HNO₃ to HCl of, for example, 3:1, and adding a small amount of hydrofluoric acid (HF) to assist in dissolving the sulfide, with a hydrofluoric acid content of, for example, 0.1% v/v. The above mixed solution was placed in a microwave digester and digested at 200 °C for 30 minutes, and then quickly transferred to a polytetrafluoroethylene container. The total molar amounts of Li, P, M, S and X elements were determined by inductively coupled plasma mass spectrometry (ICP-MS) and denoted as n_{Li}, n_{P}, n_{M}, n_{S}, and n_{X}, respectively. Assuming the impurities Li₂S is y mol, LiCl is z mol, P is w mol, and main phase LiₐP_{1-b}M_{b}S_{c}O_{d}Xₑ is x mol in the sulfide solid electrolyte, the following system of equations is established: $\left\{\begin{matrix}ax + 2 y + z = {n}_{Li} \\ \left(1-b\right) x + w = {n}_{P} \\ cx + y = {n}_{s} \\ ex + z = {n}_{X}\end{matrix}\right.$ solving the system of equations yields the values of x, y, z, and w;
substituting into the equation: $Purity = \frac{x \times {M}_{{Li}_{a} {P}_{1 - b} {M}_{b} {S}_{c} {O}_{d} {X}_{e}}}{x \times {M}_{{Li}_{a} {P}_{1 - b} {M}_{b} {S}_{c} {O}_{d} {X}_{e}} + y \times {M}_{{Li}_{2} S} + z \times {M}_{LiCl} + w \times {M}_{P}} 100 %$
yields the phase purity of the sulfide solid electrolyte, wherein M is the relative molecular mass of the substance.

**In** Examples 1 to 15 and Comparative Examples 1 to 4 of the invention, different sulfide solid electrolytes were used to obtain lithium-ion batteries. The lithium-ion batteries prepared above were subjected to long-cycle charge and discharge at 25 °C to measure the discharge capacity thereof, and the energy density thereof was calculated. In particular, the battery test operated within a voltage range of 2.5 V to 4.3 V, with a charge/discharge rate of 1C/1C. The discharge capacity of the first cycle was recorded as the 1C discharge capacity. The test ended when the battery capacity reached 80% of the first cycle capacity (80% State of Health, 80% SOH), and the number of cycles at room temperature was obtained. A constant current charge-discharge cycle test was performed on the symmetrical battery at a current density of 1 mA/cm², and the test results are shown in Table 1.

**Table 1. Performance of sulfide solid electrolytes and lithium-ion batteries in Examples 1 to 15 and Comparative Examples 1 to 4**

| Group | Chemical formula of sulfide solid electrolyte | Li₂S diffractio n peaks at 27° to 27.3° in XRD pattern | P diffractio n peaks at 29° to 29.5° in XRD pattern | LiCl diffraction peaks at 35° to 35.2° in XRD pattern | Number of cycles at 1C/1C (80% SOH) | Purity of sulfide solid electrol yte |
|---|---|---|---|---|---|---|
| Example 1 | Li_{5.53}P_{0.99}Mg_{0.01}S_{4.49}O_{0.01}Cl_{1. 5} | None | None | None | 142 | 99.13 |
| Example 2 | Li_{5.545}P_{0.985}Mg_{0.015}S_{4.485}O_{0.015} Cl_{1.5} | None | None | None | 251 | 99.21 |
| Example 3 | Li_{5.56}P_{0.98}Mg_{0.02}S_{4.48}O_{0.02}Cl_{1. 5} | None | None | None | 581 | 99.94 |
| Example 4 | Li_{5.68}P_{0.94}Mg_{0.06}S_{4.44}O_{0.06}Cl_{1. 5} | None | None | None | 461 | 99.63 |
| Example 5 | Li_{5.8}P_{0.9}Mg_{0.1}S_{4.4}O_{0.1}Cl_{1.5} | None | None | None | 374 | 99.56 |
| Example 6 | Li_{5.16}P_{0.98}Mg_{0.02}S_{4.08}O_{0.02}Cl_{1. 9} | None | None | None | 221 | 99.87 |
| Example 7 | Li_{6.06}P_{0.98}Mg_{0.02}S_{4.98}O_{0.02}Cl | None | None | None | 230 | 99.89 |
| Example 8 | Li_{6.96}P_{0.98}Mg_{0.02}S_{5.88}O_{0.02}Cl_{0. 1} | None | None | None | 194 | 99.91 |
| Example 9 | Li_{5.56}P_{0.98}Mg_{0.02}S_{4.48}O_{0.02}Cl_{1. 4}Br_{0.1} | None | None | None | 495 | 99.92 |
| Example 10 | Li_{5.56}P_{0.98}Mg_{0.02}S_{4.48}O_{0.02}Cl_{1. 3}Br_{0.1}I_{0.1} | None | None | None | 457 | 99.93 |
| Example 11 | Li_{5.54}P_{0.98}In_{0.02}S_{4.47}O_{0.03}Cl_{1.5} | None | None | None | 591 | 99.91 |
| Example 12 | Li_{5.54}P_{0.98}Bi_{0.02}S_{4.47}O_{0.03}Cl_{1.5} | None | None | None | 583 | 99.93 |
| Example 13 | Li_{5.5}P_{0.96}Sb_{0.04}S_{4.40}O_{0.10}Cl_{1.5} | None | None | None | 596 | 99.95 |
| Example 14 | Li_{5.56}P_{0.98}Ca_{0.02}S_{4.48}O_{0.02}Cl_{1.5} | None | None | None | 374 | 99.89 |
| Example 15 | Li_{5.56}P_{0.98}Zn_{0.02}S_{4.48}O_{0.02}Cl_{1.5} | None | None | None | 482 | 99.88 |
| Comparat ive Example 1 | Li_{5.5}PS_{4.5}Cl_{1.5} | Yes | Yes | Yes | 72 | 96.53 |
| Comparat ive Example 2 | Li_{5.5}PS_{4.5}Cl_{1.4}Br_{0.1} | Yes | None | Yes | 76 | 97.12 |
| Comparat ive Example 3 | Li_{5.5}PS_{4.5}Cl_{1.3}Br_{0.1}I_{0.1} | Yes | None | Yes | 78 | 97.33 |
| Comparat ive Example 4 | Li_{5.92}P_{0.86}Mg_{0.14}S_{4.36}O_{0.14}Cl_{1. 5} | None | None | None | 103 | 97.54 |

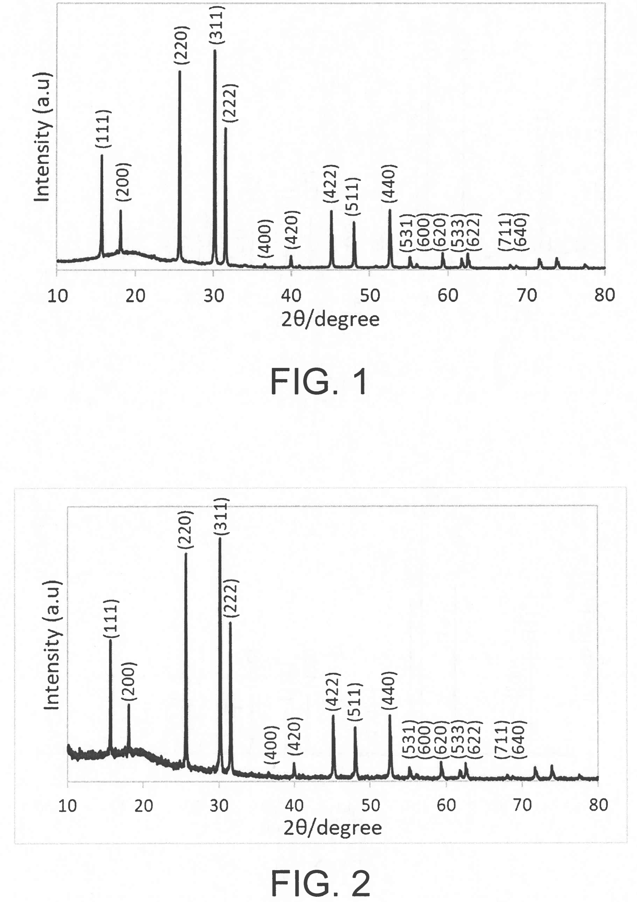

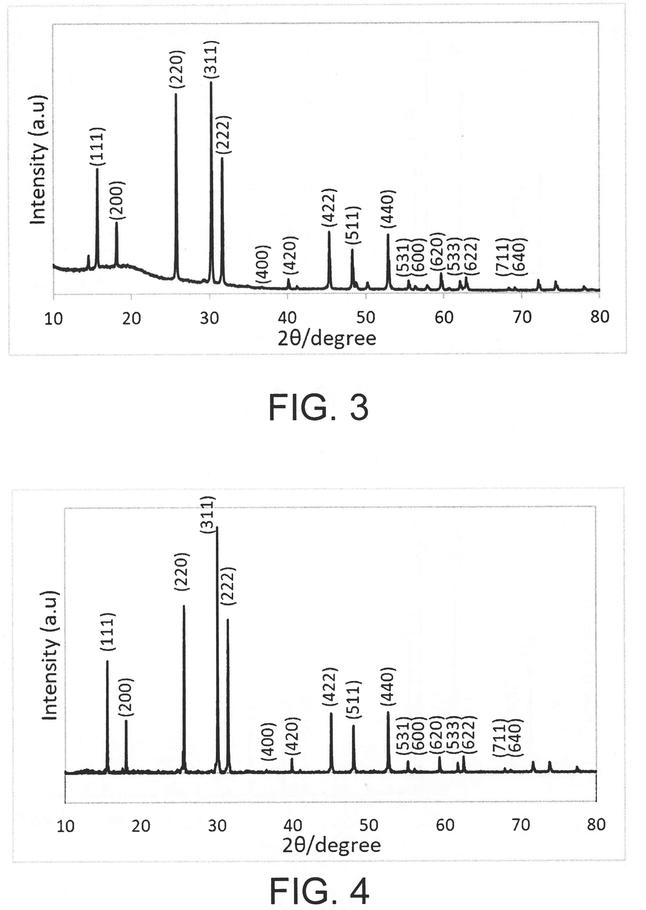

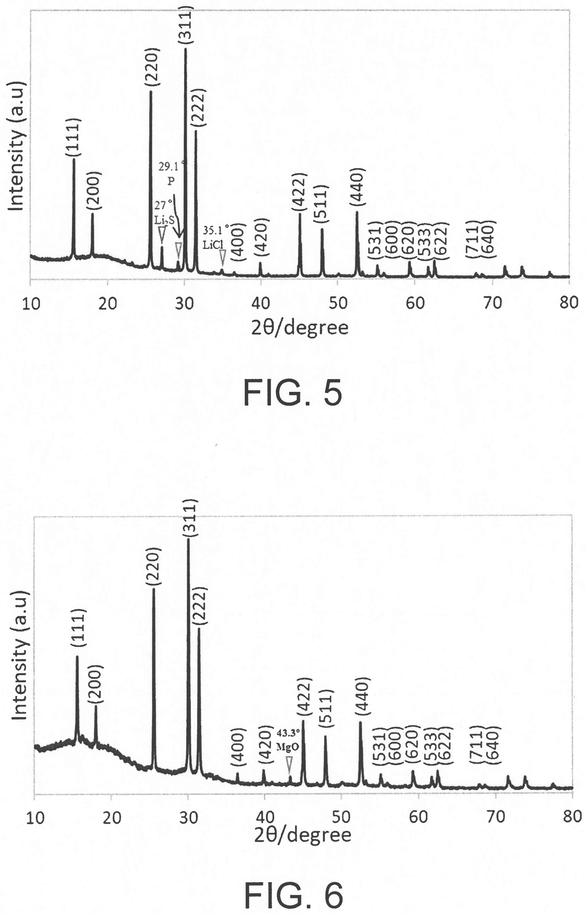

Please refer to FIG. 1 to FIG. 5. By comparing Examples 3, 11 to 13, and Comparative Examples 1 and 4, it may be seen that by doping with different M elements and controlling the amount of M element doping, the sulfide solid electrolyte obtained in the present application has stronger diffraction peaks at 2θ positions of 17.5±0.3°, 25.5±0.3°, 30.5±0.3°, and 32±0.3°, which are the diffraction peaks of the (111), (220), (311), and (222) crystal planes, respectively. This indicates that by doping with different M elements and at the optimal content of M element, the sulfide solid electrolyte has a better crystal structure and thus has a higher ionic conductivity. This shows that the doping of M element does not destroy the crystal structure of the sulfide solid electrolyte. As shown in FIG. 5, in the XRD pattern of undoped Li_{5.5}PS_{4.5}Cl_{1.5} from Comparative Example 1, a diffraction peak for Li₂S appears at 27°, a diffraction peak for P appears at 29.1°, and a diffraction peak for LiCl appears at 35.1°. As shown in FIG. 1 to FIG. 4, after doping, in the XRD patterns of doped Li_{5.56}P_{0.98}Mg_{0.02}S_{4.48}O_{0.02}Cl_{1.5}, Li_{5.54}P_{0.98}In_{0.02}S_{4.47}O_{0.03}Cl_{1.5}, Li_{5.54}P_{0.98}Bi_{0.02}S_{4.47}O_{0.03}Cl_{1.5}, and Li_{5.5}P_{0.96}Sb_{0.04}S_{4.40}O_{0.10}Cl_{1.5}, no diffraction peaks appeared in the ranges of 2θ of 27° to 27.3°, 29° to 29.5°, and 35° to 35.2° under different M element doping conditions. This indicates that by introducing specific doping elements and optimizing the doping amount, the formation of impurity phases such as Li₂S, LiCl, and P may be effectively suppressed, and a high-purity sulfide solid electrolyte may be obtained. As shown in FIG. 6, the XRD pattern of doped Li_{5.92}P_{0.86}Mg_{0.14}S_{4.36}O_{0.14}Cl_{1.5} shows that when the M element is doped in excess, b > 0.1, and a MgO diffraction peak appears at a position where 2θ is 43.3°. This indicates that the introduction of an excess of a specific doping element may also lead to the formation of a new impurity phase.

Please refer to Table 1. By comparing Examples 1 to 15 and Comparative Examples 1 to 3, it may be seen that when the sulfide solid electrolyte is not doped with M element and O element, the sulfide solid electrolyte shows diffraction peaks of at least one of the impurities, Li₂S, P, or LiCl, and the purity of the sulfide solid electrolyte is lower. When doped with M element and O element, no diffraction peaks appeared in the XRD pattern within the range of 2θ of 27° to 27.3°, 29° to 29.5°, and 35° to 35.2°, and the purity of the sulfide solid electrolyte is greater than 99%. This indicates that doping may suppress the formation of impurities, thereby reducing irreversible lithium-ion consumption and side reactions such as reduced coulombic efficiency, thus improving the coulombic efficiency of the lithium-ion battery, and thus improving the energy efficiency and cycle performance of the lithium-ion battery.

Please refer to Table 1. By comparing Examples 1 to 5 and Comparative Example 4, it may be seen that when Mg is selected as the M element in the sulfide solid electrolyte, as the doping amount of Mg increases, the purity of the sulfide solid electrolyte first increases and then decreases, and the cycle performance of the lithium-ion battery gradually increases and then gradually decreases. This is because when the Mg doping level is lower, the main diffraction peaks of these samples are well correlated with the pure silver sulfide germanite structure (Li₇PS₆, see XRD standard card PDF#0868), and there are no significant impurity phases in the spectrum, indicating the successful fabrication of the target Mg-O co-doped electrolyte. However, as the doping concentration increases further, diffraction peaks of the MgO impurity phase appear in the XRD pattern, leading to a decrease in the purity and electrochemical performance of the sulfide solid electrolyte. Therefore, controlling the doping amount of element M may suppress the formation of impurity phases, and at the same time improving the purity of the sulfide solid electrolyte and the electrochemical performance of the lithium-ion battery.

Please refer to Table 1. By comparing Examples 3 and 6 to 8, it may be seen that when the Mg element doping amount in the sulfide solid electrolyte is the same, increasing or decreasing the Cl element content does not significantly change the purity, but reduces the cycle performance of the lithium-ion battery. Therefore, controlling the doping amount of M may control the purity of the sulfide solid electrolyte and control the content of Cl element, so as to ensure the performance of the lithium-ion battery with sulfide solid electrolyte.

Please refer to Table 1. By comparing Examples 3 and 9 to 10, it may be seen that when the amount of Mg element doping in the sulfide solid electrolyte is the same, the addition of one or a plurality of Br or I elements reduces the cycle performance of the battery, and the purity does not change much. Therefore, choosing Cl element as X may improve the electrical performance of the lithium-ion battery. By comparing Examples 3 and 11 to 15, it may be seen that when other elements are selected as doping elements for M, controlling the doping amount of M may also suppress the formation of impurity phases and improve the purity of the sulfide solid electrolyte. However, when Sb, In, Bi, or Mg are selected as doping elements for M, the cycle performance of the lithium-ion battery is better. Therefore, controlling the type and amount of M element doping may regulate the nucleation and growth of the sulfide solid electrolyte, regulate the thermodynamics and kinetics during the growth process, increase the formation rate of the target product, suppress the formation of impurity phases, thereby improving phase purity and thus improving the performance of the lithium-ion battery.

The invention also provides an electronic equipment. The electronic equipment includes at least one of the above lithium-ion batteries, and the lithium-ion battery is used to provide electrical energy. In particular, the electronic equipment may include a vehicle, a mobile phone, a portable equipment, a laptop, a ship, a spacecraft, an electric toy, and a power tool, etc. In one embodiment of the invention, the vehicle is, for example, a new energy vehicle, and the new energy vehicle may be a pure electric vehicle, a hybrid electric vehicle, or a range-extended vehicle, etc. The spacecraft includes an airplane, a rocket, a space shuttle, and a spaceship, etc., and the electric toy includes a stationary or mobile electric toy, such as a game console, an electric car toy, an electric ship toy, and an electric airplane toy, etc. The power tool includes a metal cutting power tool, a grinding power tool, an assembly power tool, and a railway power tool, such as an electric drill, an electric grinder, an electric wrench, an electric screwdriver, an electric hammer, an impact drill, a concrete vibrator, and an electric planer, etc. The electronic equipment includes the lithium-ion battery, and therefore the advantages of including the lithium-ion battery are not repeated herein.

Based on the above, the invention provides a sulfide solid electrolyte and a preparation method and an application thereof. By controlling the types of raw materials used in the synthesis of the sulfide solid electrolyte, the nucleation of the sulfide solid electrolyte may be promoted, and the grain growth direction and rate may be controlled, resulting in more uniform grain size, higher crystallinity, reduced impurity phases at grain boundaries, and improved phase purity. At the same time, the selection of synthetic raw materials may change the thermodynamic and kinetic conditions of the reaction, enabling thermodynamic and kinetic regulation, reducing the Gibbs free energy of impurity phase formation, making the reaction more inclined to generate the crystalline phase of the sulfide solid electrolyte, increasing the formation rate of the target product, and inhibiting the formation of impurity phase. By introducing specific doping elements and optimizing the doping amount, the formation of impurity phases such as Li₂S, LiCl, and P is effectively suppressed, resulting in high-purity sulfide solid electrolyte and enhancing the air stability and chemical stability of the sulfide solid electrolyte. A high-purity doped sulfide solid electrolyte may be obtained, thus reducing irreversible lithium-ion consumption and coulombic efficiency reduction caused by impurities, reducing these side reactions, improving coulombic efficiency, and thus improving the energy efficiency and cycle performance, etc., of the lithium-ion battery.

## Claims

1. A sulfide solid electrolyte, wherein a molecular formula of the sulfide solid electrolyte is LiₐP_{1-b}M_{b}S_{c}O_{d}Xₑ; wherein: 5<a<10; 0<b<1, 3<c<6, 0<d<2.5, 4<c+d<6, 0<e<2; M is selected from one or a plurality of Al, Ga, In, Ti, Sc, As, Sb, Bi, V, Nb, Ca, Mg, Sr, Ba, Zn, Cr, Sn, or Pb, and X is selected from one or a plurality of Cl, Br, or I, and in an X-ray diffraction pattern obtained by CuKα radiation of a sulfide solid electrolyte powder, no diffraction peaks appear in ranges of 27° to 27.3°, 29° to 29.5°, and 35° to 35.2°.

2. The sulfide solid electrolyte according to claim 1, wherein M is selected from one or a plurality of Sb, In, Bi, or Mg, and X is selected from Cl.

3. The sulfide solid electrolyte according to claim 1, wherein a value of b is in a range of 0 < b ≤ 0.1.

4. The sulfide solid electrolyte according to claim 1, wherein a purity of the sulfide solid electrolyte is greater than 99%.

5. A preparation method of the sulfide solid electrolyte according to any one of claims 1 to 4, comprising following steps:
mixing a Li source, a P source, a M source, a S source, and a X source stoichiometrically according to a chemical formula of the sulfide solid electrolyte and then performing a grinding treatment to obtain a sulfide solid electrolyte precursor powder; and
performing a calcination treatment on the sulfide solid electrolyte precursor powder to obtain the sulfide solid electrolyte.

6. The preparation method of the sulfide solid electrolyte according to claim 5, wherein the Li source is selected from one or a plurality of LiCl, LiBr, LiI, or Li₂S; the P source is selected from one or a plurality of elemental P, P₂S₅, P₄S₆, PCl₅, or PBr₅, the M source is selected from one or a plurality of oxides of M or sulfides of M; the S source is selected from one or a plurality of elemental S, Li₂S, P₂S₅, P₄S₆, or the sulfides of M, and the sulfides of M comprise one or a plurality of As₂S₅, As₂S₃, Sb₂S₅, Sb₂S₃, Bi₂S₅, Bi₂S₃, Al₂S₃, Ga₂S₃, In₂S₃, Sc₂S₃, MgS, CaS, SrS, BaS, ZnS, CrS, SnS, or PbS; the X source is selected from one or a plurality of LiCl, PCl₅, LiBr, PBr₅, LiI, or I₂; the O element in the chemical formula comes from the oxide of M.

7. The preparation method of the sulfide solid electrolyte according to claim 5, wherein a grinding time is 1h to 48h, a grinding speed is 50 rpm to 1500 rpm, and a ball-to-material ratio is 1:1 to 100:1.

8. The preparation method of the sulfide solid electrolyte according to claim 5, wherein a temperature of the calcination treatment is 400 °C to 600 °C and a time of the calcination treatment is 1h to 24h.

9. A all-solid-state lithium-ion battery, comprising at least:
a positive electrode sheet;
a negative electrode sheet; and
a solid electrolyte membrane, wherein the solid electrolyte membrane is disposed between the positive electrode sheet and the negative electrode sheet adjacent to each other, and the solid electrolyte membrane comprises the sulfide solid electrolyte according to any one of claims 1 to 4.

10. An electronic equipment, comprising the all-solid-state lithium-ion battery according to claim 9.
